# EUROPÄISCHE PATENTSCHRIFT

(11) **EP 3 281 034 B1**
(45) Veröffentlichungstag und Bekanntmachung des Hinweises auf die Patenterteilung: **05.05.2021**
(21) Anmeldenummer: 16717088.5
(22) Anmeldetag: 11.03.2016
(51) Int. Cl.: G01S 17/32, G01S 17/95, G01S 7/481, G01S 7/493, G01S 7/4912, G01S 17/58

(54) **STÖRLICHT-TOLERANTES LIDAR-MESSSYSTEM UND STÖRLICHT-TOLERANTES LIDAR-MESSVERFAHREN**
INTERFERENCE LIGHT TOLERANT LIDAR MEASUREMENT SYSTEM AND INTERFERENCE LIGHT TOLERANT LIDAR MEASUREMENT METHOD
SYSTÈME DE MESURE LIDAR TOLÉRANT À LA LUMIÈRE PERTURBANT ET PROCÉDÉ DE MESURE LIDAR TOLÉRANT À LA LUMIÈRE PERTURBANT

(30) Priorität: 07.04.2015 DE 102015004272
(43) Veröffentlichungstag der Anmeldung: 14.02.2018
(73) Patentinhaber: METEK Meteorologische Messtechnik GmbH, 25337 Elmshorn (DE)
(72) Erfinder: Brinkmeyer, Ernst, 21244 Buchholz (DE)
(74) Vertreter: Heinemeyer, Karsten
(86) Internationale Anmeldenummer: PCT/DE2016/100110
(87) Internationale Veröffentlichungsnummer: WO 2016/162010

(56) Entgegenhaltungen:
- EP-A1- 2 730 947
- EP-A2- 1 055 941
- Anonymous: "Optoplex 90o Optical Hybrid - QPSK Demodulator", , 18. Juni 2009 (2009-06-18), XP055281122, Gefunden im Internet: URL:http://web.archive.org/web/20090618054 625/http://optoplex.com/Optical_Hybrid.htm [gefunden am 2016-06-16]
- BRINKMEYER ERNST: "CW Lidar for wind sensing featuring numerical range scanning and strong inherent suppression of disturbing reflections", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, Bd. 9645, 20. Oktober 2015 (2015-10-20), Seiten 96450C-96450C, XP060062614, DOI: 10.1117/12.2191998 ISBN: 978-1-62841-730-2

## Beschreibung

Die vorliegende Erfindung betrifft ein Störlicht-tolerantes Lidar-Messsystem zur Detektion der Anwesenheit und/oder Bewegung von Partikeln und/oder Objekten in einem von dem Lidar-Messsystem entfernten Raumbereich und ein Verfahren zur Detektion der Anwesenheit und/oder Bewegung von Partikeln und/oder Objekten in einem entfernten Raumbereich mit Hilfe eines derartigen Lidar-Messsystems. Sie ist eine Erweiterung der Erfindung "Lidar-Messsystem und Lidar-Messverfahren", die mit der internationalen Veröffentlichungsnummer WO 2014/072514 A1 offengelegt wurde, für den in der Praxis häufigen Fall, dass das Messsystem innere Störreflexe und/oder Störstreuungen und/oder Stör-Lichtüberkopplungen besitzt, die leistungsmäßig zu detektierende Nutzsignale deutlich übertreffen. Der dort zitierte Stand der Technik liegt auch vollständig der vorliegenden Erfindung zugrunde. Diese in WO 2014/072514 A1 dargelegten Grundlagen werden im Rahmen der vorliegenden Erfindungsbeschreibung der Vollständigkeit halber in weiten Teilen wiederholt. Sie werden teilweise wörtlich wiedergegeben, da der Erfinder der vorliegenden Erfindung auch federführender Erfinder bei WO 2014/072514 A1 ist. Gleichermaßen gilt der erfinderische Inhalt von WO 2014/072514 A1 hier als vorbekannt und wird in der vorliegenden Erfindung teilweise wörtlich wiedergegeben. Ferner ist die Nomenklatur von WO 2014/072514 A1 übernommen.

Lidar (Light detection and ranging) ist ein dem Radar eng verwandtes Verfahren, das statt der im Fall des Radar eingesetzten Funkwellen Laserlicht einsetzt. Mit ihm kann eine Fernmessung verschiedener Atmosphärenparameter und insbesondere aus der Ferne eine Bestimmung der Anwesenheit, des Abstands und der Geschwindigkeit von in der Luft oder einer anderen Atmosphäre befindlichen Partikeln und anderen Objekten vorgenommen werden. Grundsätzlich können alle Partikel, die das verwendete Licht streuen, und alle Objekte vermessen werden, die eine reflektierende Störstelle im Raum oder einen Streukörper darstellen.

Lidar trägt somit dem in verschiedenen Bereichen der Technik bestehenden Bedarf Rechnung, physikalische Parameter an von der eigentlichen Messvorrichtung entfernten Orten ortsaufgelöst, drahtlos und nicht-invasiv als Funktion der Zeit zu bestimmen. Beispielsweise ist es mit Hilfe von Lidar möglich, über die Vermessung durch Wind bewegter Partikel die an einem von der Messvorrichtung entfernten Ort herrschende Windgeschwindigkeit zu ermitteln. Dies kann zum Beispiel ausgenutzt werden, um in einfacher Weise in bis zu einigen hundert Metern Entfernung vor einer Windkraftanlage die Windgeschwindigkeit zu messen und auf Basis der gemessenen Windgeschwindigkeit regeltechnische Parameter der Windkraftanlage so anzupassen, dass ein möglichst optimaler Wirkungsgrad erzielt und dabei gleichzeitig die Belastung der Windkraftanlage durch den Wind möglichst gering gehalten wird, und bei extremen Windböen ggf. rechtzeitig Notfallmaßnahmen, wie etwa eine Notabschaltung, zu ergreifen, um eine Beschädigung der Windkraftanlage zu verhindern .

Bekannte Lidar-Systeme zur Bestimmung von Windgeschwindigkeiten beruhen auf der Detektion der durch die Streuung von Laserlicht an mit dem Wind mitbewegten Partikeln bewirkten Doppler-Frequenzverschiebung des Streulichts (vgl. z.B. C. Weitkamp, Lidar - Range-resolved optical remote sensing of the atmosphere, Springer 2005). Daher kann unmittelbar jeweils nur die Windgeschwindigkeit in der Sichtlinie des verwendeten Laserstrahls ermittelt werden.

Die Doppler-Frequenzverschiebung wird in den meisten Fällen interferometrisch durch Überlagerung des an einer Messvorrichtung empfangenen Streulichts mit direktem Licht der verwendeten Laserquelle bestimmt. Zu diesem Zweck werden im Stand der Technik hochkohärente Laserquellen mit Kohärenzlängen von mehreren hundert Metern verwendet, die optischen Quellenbandbreiten im Sub-MHz-Bereich entsprechen. Im Stand der Technik sind zur Erzielung von Ortsauflösung grundsätzlich zwei unterschiedliche Vorgehensweisen bekannt.

Gemäß der einen Vorgehensweise werden gepulste Laserquellen eingesetzt, wobei die Ortsbestimmung über eine Laufzeitmessung der Laserpulse erfolgt. Auf diese Weise können mit einem Puls, dessen Pulsbreite die Ortsauflösung bestimmt, die für Pulse mit einer Breite von 200 ns beispielsweise ca. 30 m beträgt, nacheinander mehrere Auflösungselemente zwischen z.B. 0 und 300 m Abstand von dem Messsystem abgefragt werden. Diese Auflösungselemente sind jeweilige Teilabschnitte des interessierenden Raumbereichs, der von den Laserpulsen durchlaufen wird.

Allerdings ergeben sich regelmäßig aufgrund der jeweils nur für kurze Zeit erfolgenden Beleuchtung jedes Auflösungselements durch den Puls mäßige oder schlechte Signal-Rausch-Verhältnisse, und die Frequenzauflösung und damit auch die Windgeschwindigkeitsauflösung ist aufgrund der kurzen Pulsbreiten begrenzt. Außerdem müssen in der Regel relativ aufwändige Lasersysteme mit einem Masteroszillator und einem Leistungsverstärker verwendet werden.

Gemäß der anderen Vorgehensweise werden Dauerstrich-Laserquellen eingesetzt, deren Strahl mit Hilfe eines geeigneten optischen Systems, wie einer Linse oder eines Teleskops, auf die jeweils gewünschte Zielentfernung fokussiert wird (vgl. z.B. WO 2005/114253 A1). Bei geeigneter Fokussierung stammt dann prinzipiell der größte Teil des empfangenen Streulichtes aus dem fokusnahen Bereich, so dass durch Verschiebung des Fokusbereichs unterschiedliche Teilabschnitte eines interessierenden Raumbereichs in unterschiedlichen Entfernungen untersucht werden können.

Allerdings besteht dabei das grundsätzliche Problem, dass die effektive Fokuslänge in etwa quadratisch mit dem Abstand von dem zur Fokussierung verwendeten optischen System zunimmt, so dass für große Abstände nur noch eine schlechte Ortsauflösung erreichbar ist. Ferner wird jeweils auch Streulicht von Partikeln außerhalb des Fokusbereichs empfangen. Wenn derartige Partikel einen größeren Streuquerschnitt als die Partikel im Fokusbereich haben oder in sehr viel größerer Konzentration als die Partikel im Fokusbereich vorliegen, kann ihr Streulicht doch den größten Teil des empfangenen Streulichtes bilden und das Signal aus dem Fokusbereich unkenntlich machen. Ohne aufwändige Maßnahmen würde die gemessene Windgeschwindigkeit dann einem falschen Ort zugeordnet. Ein Beispiel ist eine ggf. deutlich hinter dem Zielbereich, d.h. dem Fokusbereich, befindliche dichte Wolkendecke. Schließlich ist es von Nachteil, dass die Änderung der Fokussierung, die im Allgemeinen mechanisch erfolgt, zusätzlichen apparativen Aufwand erfordert und eine erhebliche Zeit in Anspruch nimmt.

In der Offenlegungsschrift WO 2014/072514 A1 und in den Druckschriften
- E. Brinkmeyer and Th. Waterholter, Continuous wave synthetic low-coherence wind sensing Lidar: motionless measurement system with subsequent numerical range scanning Optics Express 21, pp. 1872-1897 (2013)
- E. Brinkmeyer and Th. Waterholter, Remote Wind Sensing, Lidar News Magazine, vol.4 no.4, p.58-62 (2014)
- E. Brinkmeyer and Th. Waterholter, Fiber optic CW Doppler Lidar using a synthetic broadband source, Proc. of SPIE Vol. 8894, 889402(2013)
sind Lidar-Messsysteme und Lidar-Messverfahren offengelegt, mit denen die Anwesenheit und/oder Bewegung von Partikeln in einem ausgedehnten entfernten Raumbereich schnell, flexibel und mit hoher Ortsauflösung bestimmt werden kann und die oben genannten Nachteile vermieden werden. Dabei wird eine synthetische Laserquelle verwendet, gebildet aus einer schmalbandigen Laserlicht-Erzeugungskomponente, z. B. einer schmalbandigen Laserdiode, und einem optischen Phasenmodulator, der mit vorbestimmten Signalen angesteuert wird. Neben der Vermeidung von Nachteilen liefert WO 2014/072514 A1 die Erkenntnis und den Vorteil, dass bereits eine Messung die Information über die Partikel oder Objekte längs der Sichtlinie enthält, insbesondere deren Geschwindigkeiten, und dass diese Information durch eine dort angegebene numerische Verarbeitung der Messdaten aufgedeckt werden kann. Die Erkenntnisse und Vorgehensweisen in WO 2014/072514 A1 sind Grundlage und Ausgangspunkt der vorliegenden Erfindung.

Wie in WO 2014/072514 A1 ist es auch Aufgabe der vorliegenden Erfindung, ein einfach aufgebautes Lidar-Messsystem und ein einfach durchzuführendes Lidar-Messverfahren bereitzustellen, mit denen die Anwesenheit und/oder die Bewegung von Partikeln oder Objekten in einem ausgedehnten entfernten Raumbereich schnell, flexibel und mit wählbarer Ortsauflösung bestimmt werden kann. Im Unterschied zu WO 2014/072514 A1 ist es hier die erfindungsgemäße Aufgabe, einen rauscharmen Empfang, insbesondere einen annähernd quantenrauschbegrenzten Empfang der erwünschten Nutzsignale zu erreichen auch in Anwesenheit vergleichsweise starker Störreflexe und/oder Störstreuungen und/oder Stör-Überkopplungen aus dem Messsystem selbst oder aus der unmittelbaren Nähe des Messsystems.

Die genannte Aufgabe der Unterdrückung von Stör-Reflexen und Stör-Überkopplungen ist bereits in der Druckschrift
- Waterholter, T. and Brinkmeyer, E., "Reduction of spurious reflections in olcr lidar," CLEO Conference on Lasers and Electro-Optics (paper CTu1H.6) (2013)
   adressiert worden. Die dort angesprochenen Störungen stammen beispielsweise von unerwünschten Überkopplungen innerhalb der verwendeten optischen Zirkulatoren, von Reflexionen von Endflächen optischer Fasern und von Restreflexionen an Linsensystemen. Die dort dargestellte Vorgehensweise zur numerischen Störunterdrückung ist jedoch nicht ausreichend, da bei mehreren Störungen jede dort beschriebene Unterdrückung Restsignale bei der beabsichtigten Unterdrückung weiterer Störungen hinterlässt. Ferner ist die dortige Unterdrückungsmethode nur auf diskrete Störstellen abgestellt und funktioniert unzureichend, wenn die durch Rayleigh-Streuung in dem Faserabschnitt zwischen Zirkulator und Sende-/Empfangslinse/Teleskop verteilt entstehenden Störsignale unterdrückt werden sollen. Eine effiziente Unterdrückung der Auswirkung von Störungen der genannten Art ist deshalb von außerordentlicher Wichtigkeit, da die optischen Leistungen der Störsignale an den optischen Detektoren um viele Größenordnungen über den zu detektierenden Nutzsignalen aus dem entfernten Raumbereich liegen können und diese Störungen im Messsystem auch mit höchstem Aufwand nicht vermieden werden können. Beispielsweise liegen die Leistungen der genannten Störsignale bei einer Sendeleistung von 1 W bei guten Systemen typischerweise jeweils bei 1µW, während die zu empfangenden Nutzsignale aus dem entfernten Raumbereich im Bereich von 1 pW und darunter liegen können. Ohne eine effektive Unterdrückung der Auswirkungen von Störsignalen aus dem Messsystem und dessen unmittelbarer Nähe ist somit in vielen Fällen eine Auswertung der Nutzsignale unmöglich EP 1 055 941 zeigt auch ein interferometrisches Lidar-Messsystem, wobei eine Ausführungsform sich auch mit der technischen Aufgabe der internen Reflexionen befasst.

Die genannte Aufgabe wird durch ein Lidar-Messsystem mit den Merkmalen des Anspruchs 1 und durch ein Verfahren mit den Merkmalen des Anspruchs 11 gelöst. Vorteilhafte Ausgestaltungen des Lidar-Messsystems und des Verfahrens sind Gegenstand der jeweils zugehörigen Unteransprüche.

Nach der vorliegenden Erfindung ist vorgesehen, dass ein Lidar-Messsystem zur Detektion der Anwesenheit und/oder Bewegung von Partikeln und/oder Objekten in einem von dem Lidar-Messsystem entfernten Raumbereich eine Interferometeranordnung mit einer Dauerstrich-Laserquelle, einer Photoempfängeranordnung, verschiedenen optischen Komponenten zur Leitung von Licht der Dauerstrich-Laserquelle entlang vorbestimmter optischer Wege und einer Auswerteeinheit aufweist.

Die Photoempfängeranordnung ist angepasst, um Detektorsignale auszugeben, die für auf sie auftreffendes Licht charakteristisch ist, das der Dauerstrich-Laserquelle entstammt. Sie kann einen oder mehrere Photodetektoren aufweisen.

Die optischen Komponenten sind so angepasst und angeordnet, dass von der Dauerstrich-Laserquelle im Betrieb ausgesandtes Licht zunächst aufgeteilt wird, anschließend entlang eines einen Mess- bzw. Signalzweig der Interferometeranordnung bildenden ersten optischen Weges und eines von diesem getrennten und einen Referenzzweig der Interferometeranordnung bildenden zweiten optischen Weges geleitet wird und schließlich nach Durchlaufen des Messzweiges und des Referenzzweiges auf die Photoempfängeranordnung auftrifft. Die Interferometeranordnung weist somit den Aufbau eines Zweistrahlinterferometers ähnlich dem eines Mach-Zehnder-Interferometers auf.

Dabei hat der Referenzzweig eine vorbestimmte optische Weglänge, so dass die optische Laufzeit τ_{ref} im Referenzzweig so gewählt ist, dass sie der optischen Laufzeit τ_{stör,m} eines relevanten, durch Überkopplung oder Restreflexion oder Streuung unerwünschten Lichtweges im Messzweig möglichst genau entspricht oder einer mittleren optischen Laufzeit der unerwünschten Lichtwege und der Messzweig so angepasst ist, dass die verschiedenen relevanten Laufzeiten τ_{stör,m} sich möglichst wenig unterscheiden. Als relevant gelten dabei solche Störungen, die ohne Unterdrückung eine annährend quantenbegrenzte Detektion der Nutzsignale aus dem entfernten Raumbereich verhindern. Grund für die genannte Wahl der Laufzeiten τ_{ref} und τ_{stör,m} ist die Erkenntnis, dass auf diese Weise in Verbindung mit der weiter unten dargelegten speziellen treppenförmigen Phasenmodulation und bei ebenfalls weiter unten dargelegter synchroner Abtastung der Detektorsignale erreicht werden kann, dass die genannten optischen Störsignale in Systemen ohne optische Frequenzverschieber im Mess- oder Referenzzweig zu elektrischen Gleichsignalen führen und leicht unterdrückt werden können. In Systemen mit optischem Frequenzverschieber liefern die Störsignale entsprechend ein schmalbandiges elektrisches Signal bei der Verschiebungsfrequenz, das ebenfalls leicht unterdrückt werden kann.

Der Messzweig weist einen Messabschnitt auf, in dem das Licht von dem Messsystem weg in Richtung auf einen von diesem entfernten Raumbereich gerichtet ist und diesen zumindest teilweise durchläuft und von in dem Messabschnitt befindlichen Partikeln oder Objekten in Richtung auf das Messsystem rückgestreutes bzw. reflektiertes Licht wieder am Messsystem empfangen wird.

Mit anderen Worten wird ein Teil des optischen Weges des Messzweiges, nämlich der Messabschnitt, durch den Bereich der Umgebung des Messsystems gebildet, aus dem überhaupt Photonen, die von dem Messsystem in Richtung auf den entfernten Raumbereich verlaufen, bis sie an einem Partikel gestreut oder einem Objekt reflektiert werden, wieder zum Messsystem zurückkehren und dort in den Rest des Messzweiges eingekoppelt werden. Dies erfordert, dass zum einen am Beginn des Messabschnitts das den Messzweig durchlaufende Laserlicht mit Hilfe einer geeigneten Einrichtung in Richtung auf den entfernten Raumbereich abgestrahlt wird und dass zum anderen am Ende des Messabschnitts ein Teil des gestreuten Lichtes mit einer geeigneten Empfangseinrichtung empfangen und anschließend entlang des Restes des Messzweiges geleitet wird. Die optische Weglänge des Messzweiges wird somit für jedes Photon durch den Abstand der Partikel bzw. Objekte vom Messsystem bestimmt, von denen das zur Photoempfängeranordnung gelangende gestreute oder reflektierte Licht stammt.

Aus den obigen Erläuterungen ist zu entnehmen, dass der entfernte Raumbereich einen Teil des Messabschnitts bildet und im Extremfall mit dem Messabschnitt identisch sein kann. Der Messabschnitt umfasst den Bereich der Umgebung des Messsystems, aus dem überhaupt von Partikeln rückgestreutes oder von Objekten reflektiertes Licht in den Rest des Messzweiges eingekoppelt wird. Demgegenüber ist der entfernte Raumbereich der für die Detektion interessierende Bereich, der kleiner oder maximal gleich dem Messabschnitt gewählt werden kann.

Die Auswerteeinheit ist mit der Photoempfängeranordnung gekoppelt und angepasst, um deren Detektorsignale zu empfangen und auf Basis der Detektorsignale die Anwesenheit und/oder Bewegung von Partikeln und/oder Objekten in dem entfernten Raumbereich zu bestimmen. Letzteres kann beispielsweise insbesondere in derselben Weise geschehen, wie es aus dem Stand der Technik bekannt ist. Insbesondere kann die Bewegung und dabei die Geschwindigkeit in bekannter Weise über die Ermittlung der Dopplerverschiebung des detektierten Lichtes erfolgen.

Die Dauerstrich-Laserquelle ist so ausgestaltet, dass sie eine Kohärenzlänge in dem Bereich von 0,1 bis 100 m aufweist. Da kohärente Interferenz innerhalb der Photoempfängeranordnung nur für Streulicht von Partikeln bzw. reflektiertes Licht von Objekten möglich ist, für die die optische Weglänge des Messzweiges innerhalb der Kohärenzlänge mit der optischen Weglänge des Referenzzweiges übereinstimmt, wird durch die stark begrenzte Kohärenzlänge eine hohe und durch geeignete Wahl der Kohärenzlänge wählbare Ortsauflösung erreicht. Zur Detektoranordnung gelangendes Streulicht bzw. reflektiertes Licht von außerhalb dieses Kohärenzbereichs befindlichen Partikeln bzw. Objekten führt demgegenüber zu einem breitbandigen Detektorsignal. Die oben genannten Störreflexe/Störstreuungen/Störüberkopplungen im Messzweig liegen gemäß der oben angegebenen Wahl der optischen Laufzeit im Referenzzweig im Kohärenzbereich oder in seiner Nähe. Die Nutzsignale aus dem entfernten Raumbereich liegen dagegen außerhalb des Kohärenzbereiches.

Wie in WO 2014/072514 A1 und wie dort detailliert beschrieben besteht die in der vorliegenden Erfindung verwendete Dauerstrich-Laserquelle aus einer Laserlicht-Erzeugungskomponente, einem dieser nachgeschalteten optischen Phasenmodulator und einer Steuereinrichtung zur Steuerung des optischen Phasenmodulators. Die Ansteuerung des Phasenmodulators erfolgt auf der Basis eines vorbestimmten zeitdiskreten Datensatzes. Dieser Datensatz Θₙ hat die Eigenschaft, wie in WO 2014/072514 A1, genauer aber in
- E. Brinkmeyer and Th. Waterholter, Continuous wave synthetic low-coherence wind sensing Lidar: motionless measurement system with subsequent numerical range scanning Optics Express 21, pp. 1872-1897 (2013)
   beschrieben ist, dass das Betragsquadrat der diskreten Fouriertransformierten von exp(j Θₙ) ein spektrales Leistungsdichtespektrum liefert, das annähernd eine vorgegebenen Form, z.B. einer Gauss-Form, und eine vorgegebene Bandbreite hat. Nach entsprechender Phasenmodulation besitzt das optische Leistungsdichtspektrum effektiv diese Form und Breite.

Zur Ansteuerung des Phasenmodulators müssen die genannten digitalen Daten in ein analoges Ansteuersignal umgesetzt werden. Der vorliegenden Erfindung liegt nun die weitere Erkenntnis zugrunde, dass diese Umsetzung in Verbindung mit der oben angegebenen Wahl der optischen Weglänge im Referenzzweig entscheidend für die Unterdrückung der genannten Störreflexe/Störstreuungen/Störüberkopplungen im Messzweig ist. Das analoge Ansteuersignal soll erfindungsgemäß so gestaltet sein, dass die optische Phasenverschiebung eine annähernd treppenförmige Funktion bildet, wobei die Funktionswerte auf den Treppenstufen dem digitalen Datensatz Θₙ entsprechen. Die Treppenstufen sind erfindungsgemäß möglichst flach, d.h. die Phasenunterschiede auf einer Stufe sind möglichst klein. Die Breiten der Treppenstufen sind vorzugsweise gleich, z.B. 5ns oder 10ns, und richten sich nach dem Abtastheorem.

Die Auswerteanordnung hinter der Photoempfängeranordnung ist erfindungsgemäß so angepasst, dass die Detektorsignale synchron mit der stufenförmigen Ansteuerung des Phasenmodulators abgetastet werden und die Abtastzeitpunkte t_{abtast} so gewählt werden, dass die analogen Werte Θ(t_{abtast} - τ_{ref}) und Θ(t_{abtast} - τ_{stör,m}) für die relevanten Störreflexe/Störstreuungen/Störüberkopplungen auf derselben Stufe der treppenförmigen Phasenfunktion zu liegen kommen, somit annähernd gleich groß sind und ihre Differenz annähernd verschwindet. Dies führt insbesondere dazu, dass die genannten Störungen in einem System ohne Frequenzverschieber im Mess- oder Referenzzweig in den Detektorsignalen annähernd zu Gleichsignalen führen und leicht beseitigt werden können.

Ferner ist die Auswerteeinheit wie in WO 2014/072514 A1 angepasst, um die Auswertung auf Basis einer Funktion der Detektorsignale, der vorbestimmten Phasenfunktion und eines Zeitverschiebungswertes Δt_{verchiebung} vorzunehmen, die in der Weise gewählt ist, dass das Ergebnis der Funktion, im Falle der vorliegenden Erfindung nun bis auf den unterdrückten Anteil der Störreflexe/Störstreuungen/Störüberkopplungen, dem Detektorsignal entspricht, das sich bei Wahl eines Referenzzweiges ergeben würde, der gegenüber dem tatsächlichen Referenzzweig eine um Δt_{verchiebung} geänderte Laufzeit und damit auch eine entsprechend geänderte optische Weglänge aufweist. Der effektive Kohärenzbereich wird damit hier numerisch von dem Ort der Störungen im Messsystem hin zu einem gewünschten Ort im entfernten Raumbereich verschoben, der durch Δt_{verschiebung} bestimmt ist. Diese Ausgestaltung beruht auf der Erkenntnis aus WO 2014/072514 A1, dass die Detektorsignale bereits die Informationen über Partikel und Objekte in anderen Teilabschnitten des entfernten Raumbereichs in anderen Abständen vom Messsystem enthalten und diese Informationen aufgrund der zahlenmäßigen Kenntnis der vorbestimmten Phasenwerte Θₙ aufgedeckt werden können. Für die numerische Verschiebung des Kohärenzbereiches und die auf gleiche Weise sequentiell oder parallel zu bewerkstelligende Auswertung des gesamten entfernten Raumbereichs oder eines größeren Teilabschnitts von diesem ist die Kenntnis der zur Ansteuerung des optischen Phasenmodulators und zur entsprechenden Erzeugung des von der Dauerstrich-Laserquelle abgestrahlten Lichtes verwendeten Phasenfunktion Θ(t) erforderlich. Diese ist für eine natürliche Laserquelle nicht bekannt und müsste aufwändig bestimmt werden. Bei der hier verwendeten Dauerstrich-Laserquelle werden dagegen die Phaseneigenschaften des Laserstrahls synthetisch erzeugt, sind nur pseudozufällig und liegen in Form der Phasenfunktion Θ(t) zahlenmäßig vor. Diese Phasenfunktion Θ(t) findet sich in bestimmter Weise in den komplexen Amplituden der Detektorsignale wieder, die, wie in WO 2014/072514 A1 und den anderen genannten eigenen Druckschriften des Erfinders dargelegt, auf Grundlage der Kenntnis der Phasenfunktion Θ(t) gezielt numerisch verändert werden kann, um dadurch für die Zwecke der Auswertung eine von der tatsächlichen optischen Weglänge abweichende optische Weglänge des Referenzzweiges vorzutäuschen.

In einer bevorzugten Ausgestaltung der vorliegenden Erfindung umfassen die optischen Komponenten einen Strahlteiler, wie zum Beispiel insbesondere einen faseroptischen Koppler, zur Aufteilung des von der Dauerstrich-Laserquelle abgestrahlten Lichtes, polarisationserhaltende optische Fasern, sogenannte PM-Fasern, oder nicht polarisationserhaltende Fasern, die zumindest einen Teil des Referenzzweiges definieren, und/oder derartige optische Fasern, die einen Teil des Messzweiges definieren, einen optischen Verstärker, z.B. einen Erbium-Faser-Verstärker, im Messzweig oder vor der Aufteilung in Mess- und Referenzzweig und einen kohärenten optische Empfänger mit oder ohne Polarisations-Diversität (englisch: polarization diversity), der vorzugsweise ein oder zwei optische 90°-Hybride enthält.

In einer bevorzugten Ausgestaltung umfassen die optischen Komponenten wie in WO 2014/072514 A1 eine Abstrahl- und Empfangseinrichtung, die den Beginn und das Ende des Messabschnitts des Messzweiges definiert und angepasst ist, um das Licht von dem Messsystem weg in Richtung auf den Raumbereich abzustrahlen und rückgestreutes Licht wieder zu empfangen, so dass dieses entlang des Restes des Messzweiges geführt wird. Die Abstrahl- und Empfangseinrichtung kann einen Empfänger aufweisen, der räumlich von einer Abstrahleinrichtung getrennt ist (d.h. ein bistatisches System), oder eine Komponente, die an einem Ort sowohl zur Abstrahlung als auch zum Empfang von Laserlicht angepasst ist (d.h. ein monostatisches System). Die kombinierte Abstrahl-und Empfangseinrichtung kann insbesondere einen optischen Zirkulator und ein Linsensystem aufweisen.

In einer bevorzugten Ausführungsform der vorliegenden Erfindung enthält der Photoempfänger ein optsches 6-Tor 90°-Hybrid und vier Photoempfänger an den Ausgängen, von denen je zwei das sogenannte In-Phase-Signal und zwei das sogenannte Quadratursignal enthalten. Ein solcher Photoempfänger wird auch als kohärenter Empfänger mit Phasendiversität (phase diversity) bezeichnet. Die Photoempfänger können vorteilhafterweise ein Hochpassverhalten aufweisen mit einer niedrigen Grenzfrequenz von beispielsweise 100 kHz. Im Rahmen eines sogenannten balancierten Empfang werden vorteilhafterweise in bekannter Weise zum Zwecke der Störreduktion die beiden In-Phase-Signale wie auch die beiden Quadratursignale voneinander subtrahiert.

In einer weiteren bevorzugten Ausführungsform der vorliegenden Erfindung weist der Photoempfänger für den Messzweig und/oder für den Referenzweig am Eingang Polarisationsstrahlteileranordnungen auf, die die jeweiligen optischen Wellen in zwei zueinander orthogonal polarisierte, beispielsweise x- und y-polarisierte Anteile zerlegen und für jeden der beiden Polarisationszustände einen eigenen kohärenten Empfänger mit Phasendiversität. In dieser Ausführungsform können die polarisierten Teilwellen aus dem Messzweig separat analysiert werden oder ein polarisationsunabhängiges leistungsmäßiges Gesamtsignal in der Auswerteeinheit gebildet werden.

Desweiteren weisen bevorzugte Ausführungsformen der vorliegenden Erfindungen im Unterschied zu WO 2014/072514 A1 auf
- einen Messzweig mit oder ohne optischen Frequenzverschieber, bei dem die Laufzeiten τ_{stör,m} der durch Störreflexe/Störstreuungen/Störüberkopplungen entstehenden unerwünschten optischen Wege sich möglichst wenig unterscheiden
- einen Referenzzweig mit oder ohne optischen Frequenzverschieber, in dem die optische Laufzeit τ_{ref} in Bezug auf die Lage der Störreflexe/Störstreuungen/ Störüberkopplungen wie oben beschrieben gewählt ist
- die oben angegebene treppenförmige Wahl der optischen Phasenverschiebung
- die oben angegebene Wahl der Empfängeranordnung mit einem oder zwei optischen 90°-Hybriden
- eine mit dem treppenförmigen optischen Phasenverlauf synchronisierte Abtastung der Detektorsignale und eine Wahl der Abtastzeitpunkte wie oben angegeben
   und wie bei WO 2014/072514 A1
- ist die Auswerteeinheit angepasst, um die Auswertung auf Basis einer Funktion der Detektorsignale, der vorbestimmten Phasenfunktion und eines Zeitverschiebungswertes Δt_{verschiebung} vorzunehmen und die Laserlicht-Erzeugungskomponente ist angepasst, um eine Wellenlänge abzustrahlen oder gleichzeitig oder abwechselnd Laserlicht zweier Wellenlängen abzustrahlen, um auf diese Weise ein DIAL-System (differential absorption lidar) zu realisieren
   oder
- es ist die Auswerteeinheit angepasst, um die Auswertung auf Basis einer Funktion der Detektorsignale, der vorbestimmten Phasenfunktion und eines Zeitverschiebungswertes Δt_{verchiebung} vorzunehmen und ein optischer Wellenleiter definiert zumindest einen Teil des Messabschnitts und in diesem Wellenleiter befinden sich Reflexionsanordnungen, sodass auf eine in WO 2014/072514 A1 dargelegte Weise ein verteilter Wellenleiter-Sensor, insbesondere ein faseroptischer Sensor gebildet wird, in dem die entlang des optischen Wellenleiters angeordneten Reflexionseinrichtungen einzelne Sensorelemente darstellen.
   oder
- es ist die Auswerteeinheit angepasst, um die Auswertung auf Basis einer Funktion der Detektorsignale, der vorbestimmten Phasenfunktion und eines Zeitverschiebungswertes Δt_{verschiebung} vorzunehmen und ein optischer Wellenleiter definiert zumindest einen Teil des Messabschnitts, und die Rayleigh-Rückstreuung aus den Längenelementen des Wellenleiters wird ausgewertet, um daraus auf die ortsabhängige Dämpfung, auf lokalisierte Fehlstellen oder ortsabhängige Polarisationseigenschaften zu schließen.

In einer vorteilhaften Ausgestaltung des Verfahrens, in der eines der oben beschriebenen Lidarmesssysteme zum Einsatz kommt, wird der Messzweig so angepasst, dass die optischen Laufzeiten τ_{stör,m} der relevanten, durch Überkopplung oder Restreflexion oder Störstreuung entstehenden unerwünschten Lichtwege im Messzweig von der Verzweigungsstelle von Mess- und Referenzzweig zur Empfängeranordnung sich möglichst wenig unterscheiden.

In der erfindungsgemäßen Ausgestaltung des Verfahrens, in der eines der oben beschriebenen Lidarmesssysteme zum Einsatz kommt, wird der Referenzzweig so angepasst, dass die optische Laufzeit τ_{ref} im Referenzzweig von der Verzweigungsstelle von Mess- und Referenzzweig zur Empfängeranordnung möglichst genau mit derjenigen der oben genannten optischen Laufzeiten τ_{stör,m} übereinstimmt, die durch Überkopplung oder Restreflexion oder Störstreuung das größte Störsignal erzeugt oder mit einem Mittelwert der relevanten Laufzeiten τ_{stör,m}.

In einer vorteilhaften Ausgestaltung des Verfahrens, in der eines der oben beschriebenen Lidarmesssysteme zum Einsatz kommt, wird die Ansteuerung des Phasenmodulators so angepasst, dass er mit einem treppenförmigen Signal angesteuert wird, sodass die optischen Phasenwerte auf den einzelnen Treppenstufen möglichst konstant sind.

In einer vorteilhaften Ausgestaltung des Verfahrens, in der eines der oben beschriebenen Lidarmesssysteme zum Einsatz kommt, wird die Auswerteeinheit so angepasst, dass sie die Abtastzeitpunkte t_{abtast} der Detektorsignale synchron mit der treppenförmigen Ansteuerung des optischen Phasenmodulators einstellt, dergestalt, dass die analogen Werte Θ(t_{abtast}-τ_{ref}) und Θ(t_{abtast} - τ_{stör,m}) für die größten Störreflexe/Störstreuungen/Störüberkopplungen auf derselben Stufe der treppenförmigen Phasenfunktion zu liegen kommen.

In einer vorteilhaften Ausgestaltung des Verfahrens, in dem eines der oben beschriebenen Lidarmesssysteme zum Einsatz kommt und eine Auswerteeinheit, die angepasst ist, um die Auswertung auf Basis einer Funktion der Detektorsignale, der vorbestimmten Phasenfunktion und eines Zeitverschiebungswertes Δt_{verschiebung} vorzunehmen, wird an der Auswerteeinheit das Zeitintervall Δt_{verschiebung} verändert, um den effektiven Kohärenzbereich numerisch von dem Ort der Störungen im Messsystem hin zu einem gewünschten Ort im entfernten Raumbereich zu verschieben, sodass die Auswerteeinheit in diesem Teilabschnitt die Anwesenheit und/oder Bewegung von Partikeln und/oder Objekten bestimmen und quantifizieren kann.

In einer vorteilhaften Ausgestaltung des Verfahrens, in der eines der oben beschriebene Lidar-Messsysteme zum Einsatz kommt und in der Auswerteanordnung eine Detektion mit Polarisations-Diversität (polarization diversity) zum Einsatz kommt, wird das Licht zweier unterschiedlicher Polarisationsrichtungen detektiert und mit Hilfe der Auswerteeinheit werden auf Basis der beiden Teildetektorsignalen Änderungen des Polarisationszustandes durch die detektierten Partikel und/oder Objekte bestimmt und daraus Information über die Art und/oder Form der Partikel und/oder Objekte gewonnen, oder es wird ein polarisationsunabhängiges Leistungs-Gesamtsignal gebildet.

In einer vorteilhaften Ausgestaltung des Verfahrens, in der eines der oben beschriebene Lidar-Messsysteme zum Einsatz kommt, wird das Licht zweier unterschiedlicher Wellenlängenbereiche detektiert, und mit Hilfe der Auswerteeinheit wird auf Basis einer Funktion der Teildetektorsignale in beiden Wellenlängenbereichen, der vorbestimmten Phasenfunktion und einer Vielzahl unterschiedlicher Zeitverschiebungswerte Δt_{verschiebung}, die jeweils einem anderen Teilabschnitt des entfernten Raumbereichs entsprechen, ortsaufgelöst die Konzentration mindestens eines Gases bestimmt, das für die beiden Wellenlängenbereiche unterschiedliche Absorptionskoeffizienten aufweist.

In einer vorteilhaften Ausgestaltung des Verfahrens unter Verwendung eines der oben beschriebenen Lidar-Messsysteme, in dem ein optischer Wellenleiter zumindest einen Teil des Messabschnitts definiert, sind Reflexionseinrichtungen so angepasst, dass sie in Abhängigkeit einer auf sie einwirkenden Messgröße ihre Reflektivität und/oder ihre Polarisationseigenschaften ändern, oder die zwischen jeweils zwei benachbarten Reflexionseinrichtungen befindlichen Abschnitte des optischen Wellenleiters sind so angepasst, dass sie in Abhängigkeit einer auf sie einwirkenden Messgröße ihren optischen Weg ändern. Dabei kann der Wellenleiter, der einen Teil des Messabschnitts definiert, einen oder mehrere optische Modulatoren, insbesondere Phasen- oder Frequenzmodulatoren enthalten, mit dem Ziel, statische oder quasistatische Reflexionseinrichtungen effektiv als bewegte Reflexionseinrichtungen erscheinen zu lassen. In jedem Fall wird mit Hilfe der Auswerteeinheit an verschiedenen Reflexionseinrichtungen oder verschiedenen Abschnitten zwischen Reflexionseinrichtungen entsprechenden Orten die Messgröße bestimmt.

In einer vorteilhaften Ausgestaltung des Verfahrens unter Verwendung eines der oben beschriebenen Lidar-Messsysteme, in dem ein optischer Wellenleiter zumindest einen Teil des Messabschnitts definiert, ist die Messgröße eine Dehnung des optischen Wellenleiters, eine Schwingung des optischen Wellenleiters und/oder eine Temperatur.

In einer vorteilhaften Ausgestaltung des Verfahrens unter Verwendung eines der oben beschriebenen Lidar-Messsysteme, in dem ein optischer Wellenleiter zumindest einen Teil des Messabschnitts definiert, werden die Reflexionseinrichtungen durch Fehlstellen oder Rayleigh-Rückstreu-Bereiche gebildet und der optische Wellenleiter mit Hilfe der Auswerteeinheit längenaufgelöst charakterisiert. Dabei kann der Wellenleiter, der einen Teil des Messabschnitts definiert, einen oder mehrere optische Modulatoren, insbesondere Phasen- oder Frequenzmodulatoren enthalten, mit dem Ziel, die statischen oder quasistatischen Rayleigh-Rückstreu-Bereiche effektiv als bewegte Reflexionseinrichtungen erscheinen zu lassen. Durch dieses Verfahren können Faserstrecken untersucht werden, indem aus der Änderung des Detektorsignals für benachbarte Messorte auf die lokale Dämpfung geschlossen wird. Dieses Verfahren kann die Verwendung von Zeitbereichsreflektometern ersetzen.

Die Erfindung wird im Folgenden anhand eines Ausführungsbeispiels unter Bezugnahme auf die beigefügte Zeichnung näher erläutert:

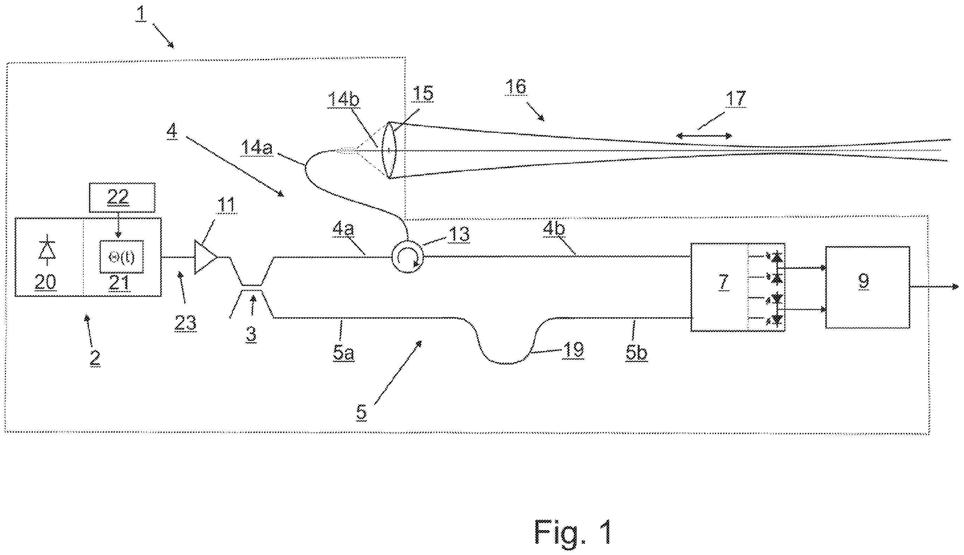

Figur 1 zeigt eine schematische Darstellung eines Lidar-Messsystems gemäß eines Ausführungsbeispiels der Erfindung.

Das in Figur 1 schematisch gezeigte Lidar-Messsystem weist auf
eine Dauerstrich-Laserquelle (2) mit einer Ausgangsleistung von z.B. 1 mW und einer Wellenlänge von z.B. 1530 nm auf, deren Licht einen Erbium-Faserverstärker (11) mit einer Ausgangsleistung von z.B. 1W durchläuft und dann durch einen Strahlteiler (3) in Form eines unsymmetrischen faseroptischen Kopplers auf einen teilweise faseroptisch definierten Messzweig (4) und einen vollständig faseroptisch definierten Referenzzweig (5) aufgeteilt wird. Die Aufteilung durch den Koppler 3 erfolgt z.B. im Verhältnis 1000:1, d.h. z.B. 0,1 Prozent der Ausganglichtleistung des Verstärkers (11) wird in den Referenzzweig gekoppelt. Alternativ kann sich der Faserverstärker (11) auch im Messzweig (4) befinden, wobei dann das Teilungsverhältnis des Kopplers (3) z.B. 1:1 sein kann. Die verwendeten optischen Fasern sind bevorzugt Monomodefasern mit niedriger Dämpfung und einem Feldradius von z.B. 5 µm. Am Ende von Messzweig (4), d.h. am Ende des Teilmesszweiges (4b), und am Ende des Referenzzweig (5) ist ein kohärenter optischer Empfänger (7) angeordnet, der ein optisches 6-Tor 90°-Hybrid enthält und vier Photodetektoren, beispielsweise InGaAs-Photodioden. Wie von kohärenten optischen Nachrichtensystemen bekannt bildet der Empfänger zwei In-Phase-Signale und zwei Quadratursignale, die in dem Empfänger (7) oder in der Auswerteeinheit (9) jeweils voneinander subtrahiert werden, um durch balancierte Detektion Störungen zu unterdrücken. Die optischen Detektoren werden bevorzugt im Empfänger (7) in einer Hochpassschaltung mit niedriger Grenzfrequenz, z.B. 100 kHz, betrieben, um Gleichsignale auszufiltern. Das In-Phase-Differenzsignal und das Quadratur-Differenzsignal wird anschließend einer Auswerteeinheit (9) zugeführt, die eines davon als Realteil und das andere als Imaginärteil eines komplexen Signales interpretiert und zu einem komplexen Signal rechnerisch zusammenführt. Dieses komplexe Signal wird schließlich in der Auswerteeinheit analysiert und es wird zur Detektion der Anwesenheit und/oder Bewegung von Partikeln und/oder Objekten ausgewertet.

Die optischen Wege in Mess- und Referenzarm sind möglichst kurz gehalten, sodass die Polarisationszustände am Ende des Faserabschnittes (4b) und am Ende des Referenzzweiges (5) einmalig eingestellt werden und dann zeitlich annähernd stabil sind. Ist dies nicht ausreichend der Fall, so werden im Mess- und/oder Referenzzweig Polarisationssteller eingesetzt oder im Mess- und/oder Referenzzweig polarisationserhaltende Fasern eingesetzt und/oder die Empfängereinheit (7) besitzt in beiden Eingangszweigen geeignete Polarisationsteiler und für jede der beiden gewählten orthogonalen Polarisationen einen kohärenten Empfänger mit je vier Photodetektoren und der Auswerteeinheit werden vier Signale zugeführt, aus denen sie für jede Polarisation ein charakteristisches komplexes Signal bildet. Der Messzweig weist einen optischen Zirkulator (13) auf, mit dessen Hilfe Licht über einen Faserabschnitt (14a) einer Sende-/Empfangslinse (15) einer Brennweite von z.B. 250mm zugeleitet wird. Der Referenzzweig (5) oder der Messzweig (4) weist eine Ausgleichs-Faserabschnitt (19) auf, sodass die optischen Wege vom Koppler (3) über den Referenzzweig zur optischen Empfängereinheit (7) möglichst gleich sind mit der Summe folgender optischer Wege, die bei Vorliegen unerwünschter Reflexionen oder Überkopplungen zu Störsignalen führen können:
(4a) und (4b) oder
(4a), (14a) hin und (14a) zurück und (4b) oder
(4a), (14a) hin, (14b) hin, (14b) zurück, (14a) zurück und (4b)
   oder einem geeigneten Zwischenwert der drei zuvor genannten Wege. Der Ausgleichs-Faserabschnitt (19) hat bemerkenswerterweise eine andere Funktion und Länge als die Umwegstrecke (18) in WO 2014/072514 A1 und kann sich je nach Konfiguration des Aufbaus anders als die Letztgenannte sowohl im Referenzzweig (5) wie im Messzweig (4) befinden.

Bevorzugt ist der Faserabschnitt (14a) so kurz wie möglich oder mehr bevorzugt wird dieser Faserabschnitt gänzlich weggelassen. Dadurch sind die optischen Wege zwischen möglichen Störstellen am Zirkulator (13), am Anfang und Ende des Faserabschnittes (14a), an der Sende-/Empfangslinse (15) und Streustellen innerhalb des Faserabschnittes (14a) klein. Trifft das Licht in dem Bereich hinter der Linse in der Weise auf rückstreuende Partikel, dass es wieder zu der Linse (15) gelangt, wird es wieder in den Faserabschnitt (14) und anschließend über den Zirkulator (13) in den Teil (4b) des Messabschnitts (4) eingekoppelt. Der Bereich, in dem überhaupt Licht durch Rückstreuung an Partikeln wieder zu der Linse (15) gelangen kann, stellt einen Messabschnitt (16) des Messzweiges (4) dar. Die Anwesenheit und/oder Bewegung von Partikeln und/oder Objekten kann in dem gesamten Messabschnitt (16) oder nur in einem Teil von diesem detektiert werden, der in der vorliegenden Anmeldung als entfernter Raumbereich bezeichnet wird. Der entfernte Raumbereich ist demnach der für eine bestimmte Messung interessierende Teil des Messabschnitts (16). Die Auswerteanordnung (9) hinter der Photoempfängeranordnung (7) ist so angepasst, dass die Detektorsignale synchron mit der stufenförmigen Ansteuerung des Phasenmodulators abgetastet werden und die Abtastzeitpunkte t_{abtast} so gewählt werden, dass die analogen Werte Θ(t_{abtast} - τ_{ref}) und Θ(t_{abtast} - τ_{stör,m}) für die relevanten Störreflexe/Störstreuungen/Störüberkopplungen auf derselben Stufe der treppenförmigen Phasenfunktion zu liegen kommen, somit annähernd gleich groß sind und ihre Differenz annähernd verschwindet. Dies führt insbesondere dazu, dass die genannten Störungen annähernd zu Gleichsignalen führen und leicht beseitigt werden können. Durch die oben beschriebene Berücksichtigung verschiedener Zeitverschiebungswerte Δt_{Verschiebung}bei der Auswertung durch die Auswerteeinheit (9) kann rein rechnerisch ohne Veränderungen an dem beschriebenen Aufbau die Detektion ortsaufgelöst für verschiedene Teilabschnitte (17) in unterschiedlichen Abständen von der Linse (15) separat vorgenommen werden.

## Patentansprüche

1. Störlicht-tolerantes Lidar-Messsystem zur Detektion der Anwesenheit und/oder Bewegung von Partikeln und/oder Objekten in einem von dem Lidar-Messsystem entfernten Raumbereich mit einer Interferometeranordnung, die aufweist:
eine Dauerstrich-Laserquelle (2),
eine Photoempfängeranordnung (7), die angepasst ist, um für auf sie auftreffendes Licht der Dauerstrich-Laserquelle (2) charakteristische Detektorsignale auszugeben, optische Komponenten, die so angepasst und angeordnet sind, dass von der Dauerstrich-Laserquelle (2) ausgesandtes Licht (23)
zunächst aufgeteilt wird,
anschließend entlang eines einen Messzweig (4) der Interferometeranordnung bildenden ersten optischen Weges und eines von diesem getrennten und einen Referenzzweig (5) der Interferometeranordnung bildenden zweiten optischen Weges geleitet wird und
schließlich nach Durchlaufen des Messzweiges (4) und des Referenzzweiges (5) auf die Photoempfängeranordnung (7) auftrifft, wobei der Referenzzweig (5) eine vorbestimmte optische Weglänge hat und
der Messzweig (4) einen Messabschnitt (16) aufweist, in dem das Licht von dem Messsystem weg in Richtung auf einen von diesem entfernten Raumbereich gerichtet ist und diesen durchläuft und von in dem Raumbereich befindlichen Partikeln und Objekten in Richtung auf das Messsystem rückgestreutes bzw. reflektiertes Licht wieder am Messsystem empfangen wird,
wobei die Dauerstrich-Laserquelle (2) eine Kohärenzlänge in dem Bereich von 0,1 bis 100 m aufweist,
und die Dauerstrich-Laserquelle (2) ferner aufweist:
eine Laserlicht-Erzeugungskomponente (20), die angepasst ist, um Laserlicht einer oder zweier Wellenlängen abzustrahlen,
einen dieser nachgeschalteten optischen Phasenmodulator (21), der angepasst ist, um das von der Laserlicht-Erzeugungskomponente (20) abgestrahlte Laserlicht zu empfangen und in seiner Phase zu modulieren, wobei der optische Phasenmodulator (21) einen Steuersignaleingang aufweist und angepasst ist, um die Phasenmodulation auf Basis einer Phasenfunktion vorzunehmen, die durch ein am Steuersignaleingang empfangenes Steuersignal definiert wird, und eine Steuereinrichtung (22), die mit dem Steuersignaleingang des optischen Phasenmodulators (21) verbunden und angepasst ist, um an den Steuersignaleingang ein Steuersignal zu liefern, das einem durch eine vorbestimmte Phasenfunktion Θ(t) definierten Pseudo-Rauschsignal entspricht, wobei das Steuersignal bewirkt, dass der optische Phasenmodulator (21) die Phasenmodulation mit der vorbestimmten Phasenfunktion Θ(t) vornimmt, so dass das optische Leistungsdichtespektrum des von der Dauerstrich-Laserquelle (2) abgestrahlten Laserlichts (23) eine durch die Phasenfunktion Θ(t) bestimmte Form und Bandbreite hat,
und die Interferometeranordnung ferner aufweist
eine Auswerteeinheit (9), die mit der interferometrischen Photoempfängeranordnung (7) gekoppelt und angepasst ist, um deren Detektorsignale zu empfangen und aus den Detektorsignalen die Anwesenheit und/oder Bewegung von Partikeln und/oder Objekten in dem entfernten Raumbereich zu bestimmen, wobei im Falle zweier von der Laserlichterzeugungskomponente (20) abgestrahlter Wellenlängen die Detektorsignale in zwei Wellenlängenbereichen separat detektiert werden,
wobei
- die Phasenfunktion Θ(t) einen vorbestimmten annähernd treppenförmigen zeitlichen Verlauf aufweist
und
- die Auswerteeinheit (9) die Detektorsignale synchron zum Zeitraster der Treppenstufen von Θ(t) abtastet,
und wobei die optische Laufzeit T_{ref} im Referenzzweig (5) so gewählt ist, dass sie der optischen Laufzeit T_{stör,m} eines durch Stör-Überkopplung oder Restreflexion oder Stör-Streuung an festen Komponenten und Objekten unerwünschten Lichtweges im Messzweig des Messsystems (1) möglichst genau entspricht oder bei mehreren solcher Lichtwege einer mittleren optischen Laufzeit der unerwünschten Lichtwege, jeweils gemessen von der Aufteilung in Mess- und Referenzzweig bis zur optischen Zusammenführung in der Empfängeranordnung (7).

2. Störlicht-tolerantes Lidar-Messsystem nach Anspruch 1, bei dem optische Faserstücke und optische Wege im Messzweig innerhalb des Messsystem (1), die Licht bidirektional zur Empfängeranordung (7) führen, möglichst kurz gewählt oder ganz weggelassen sind, sodass sich die optischen Laufzeiten T_{stör,m} unerwünschter optischer Lichtwege im Messzweig zur Photoempfängeranordnung, die durch Stör-Überkopplung oder Restreflexion oder Stör-Streuung entstehen, nur wenig unterscheiden.

3. Störlicht-tolerantes Lidar-Messsystem nach einem der vorangehenden Ansprüche, bei dem in der Auswerteeinheit (9) die Abtastzeitpunkte t_{abtast} so gewählt werden, dass θ(t_{abtast}-T_{ref}) und θ(t_{abtast} -T_{stör,m}) für die größten Störreflexe bzw. Überkopplungen auf derselben Stufe der stufenförmigen Phasenfunktion zu liegen kommen und somit annähernd gleich groß sind.

4. Störlicht-tolerantes Lidar-Messsystem nach einem der vorangehenden Ansprüche, bei dem die Auswerteeinheit (9) angepasst ist, um die von Störreflexionen und/oder Störstreuungen und/oder Stör-Lichtüberkopplungen erzeugten Signale möglichst stark zu unterdrücken, und um die Auswertung auf Basis einer Funktion der Detektorsignale, der vorbestimmten Phasenfunktion und eines Zeitverschiebungswertes Δt_{Verchiebung} vorzunehmen, wobei die Funktion in der Weise gewählt ist, dass das Ergebnis der Funktion den Detektorsignalen bei einer gegenüber der tatsächlichen Laufzeit durch den Referenzzweig (5) um Δt_{Verchiebung} geänderten Laufzeit durch den Referenzzweig (5) entspricht und die Funktion die Multiplikation der komplexen Detektorsignale mit dem Faktor exp [-i [Θ(t+Δt_{Verchiebung}) - Θ(t))] umfasst.

5. Störlicht-tolerantes Lidar-Messsystem nach einem der vorangehenden Ansprüche, bei dem die Photoempfängereinheit (7) zumindest ein optisches 90°-Hybrid umfasst und damit ein kohärenter optischer Empfänger aufgebaut ist, mit dem In-Phase- und Quadratur-Signale erzeugt werden können.

6. Störlicht-tolerantes Lidar-Messsystem nach einem der vorangehenden Ansprüche, bei dem die Photoempfängereinheit (7) zumindest ein optisches 6-Port 90°-Hybrid beinhaltet mit zwei optischen Eingängen und vier optischen Ausgängen und vier Photodetektoren für balancierten optischen Empfang von In-Phase- und Quadratur-Signalen.

7. Störlicht-tolerantes Lidar-Messsystem nach einem der vorangehenden Ansprüche, bei dem die Photoempfängereinheit (7) Polarisationsteiler-Anordnungen enthält und zwei optische 6-Port 90°-Hybride und zweimal vier Photodetektoren beinhaltet zur getrennten Detektion der Messsignale in zwei orthogonalen Polarisationszuständen oder zu dem Zwecke, aus den Teilsignalen ein polarisationsunabhängiges Leistungs-Gesamtsignal berechnen zu können.

8. Störlicht-tolerantes Lidar-Messsystem nach einem der vorhergehenden Ansprüche, bei dem die optischen Komponenten umfassen:
einen Strahlteiler (3) zur Aufteilung des von der Dauerstrich-Laserquelle (2) abgestrahlten Lichtes (23), polarisationserhaltende oder nicht-polarisationserhaltende optische Fasern, die zumindest einen Teil des Referenzzweiges (5) definieren, und/oder derartige optische Fasern, die einen Teil des Messzweiges (4) definieren,
einen optischen Verstärker (11), insbesondere einen Erbium-Faser-Verstärker, im Messzweig (4) oder vor der Aufteilung in Mess- (4) und Referenzzweig (5), wobei im Messzweig oder im Referenzzweig ein optischer Frequenzverschieber eingesetzt werden kann, und einen kohärenten optische Empfängeranordnung (7) mit oder ohne Polarisations-Diversität, der einen Strahlvereiniger, insbesondere in Form eines faseroptischen Kopplers, oder ein oder zwei optische 90°-Hybride enthält.

9. Störlicht-tolerantes Lidar-Messsystem nach einem der vorhergehenden Ansprüche, bei dem die optischen Komponenten eine Abstrahl- und Empfangseinrichtung aufweisen, die den Beginn und das Ende des Messabschnitts (16) des Messzweiges (4) definiert und angepasst ist, um das Licht von dem Messsystem weg in Richtung auf den Raumbereich abzustrahlen und im Raumbereich rückgestreutes Licht wieder zu empfangen, so dass dieses entlang des Teilweges (4b) des Messzweiges (4) geführt wird.

10. Störlicht-tolerantes Lidar-Messsystem nach einem der vorhergehenden Ansprüche, bei dem die optischen Komponenten eine Einkoppelanordnung in einen Wellenleiter aufweisen und der optischer Wellenleiter mit darin enthaltenen Reflexionseinrichtungen zumindest einen Teil des Messabschnittes (16) definiert, um auf diese Weise den Wellenleiter selbst bezüglich Fehlstellen, ortsabhängiger Dämpfung oder ortsabhängiger Polarisationseigenschaften zu analysieren oder um einen verteilten wellenleiteroptischen, insbesondere faseroptischen Sensor zu realisieren, wobei der Wellenleiter, der einen Teil des Messabschnitts definiert, einen oder mehrere optische Modulatoren, insbesondere Phasen- oder Frequenzmodulatoren enthalten kann, mit dem Ziel, statische oder quasistatische Reflexionseinrichtungen oder Rayleigh-Rückstreu-Bereiche effektiv als bewegte Reflexionseinrichtungen erscheinen zu lassen.

11. Verfahren zur Detektion der Anwesenheit und/oder Bewegung von Partikeln in einem entfernten Raumbereich mit Hilfe eines Störlicht-toleranten Lidar-Messsystems nach einem der Ansprüche 1 bis 10 mit den Schritten:
Anordnen des Messzweiges (4) in der Weise, dass der entfernte Raumbereich Teil des Messabschnitts (16) ist,
Einstellen der Form und/oder Bandbreite des optischen Leistungsdichtespektrums des von der Dauerstrich-Laserquelle (2) abgestrahlten Laserlichtes (23), indem die vorbestimmte Phasenfunktion Θ(t) an der Steuereinrichtung (22) entsprechend eingestellt wird,
Betreiben der Dauerstrich-Laserquelle (2), um Laserlicht
gleichzeitig entlang des Messzweiges (4) und entlang des Referenzzweiges (5) zu leiten, und
Bestimmen der Anwesenheit und/oder Bewegung und /oder Veränderung von Partikeln und/oder Objekten in dem entfernten Raumbereich mit Hilfe der Auswerteeinheit (9).

12. Verfahren nach Anspruch 11, bei dem das Störlicht-tolerante Lidar Messsystem nach einem der Ansprüche 1 bis 10 ausgestaltet ist und das den Schritt aufweist, dass die optische Phase hinter der Dauerstrich-Laserquelle (2) mit Hilfe der Steuereinrichtung (22) und des Phasenmodulators (21) annähernd treppenförmig eingestellt wird.

13. Verfahren nach Anspruch 11 oder 12, bei dem das Störlicht-tolerante Lidar-Messsystem nach einem der Ansprüche 1 bis 10 ausgestaltet ist und das ferner den Schritt aufweist, dass die optischen Laufzeiten T_{ref} und T_{stör,m} gemäß den Vorgaben in den Ansprüchen 1 und 2 eingestellt werden und die Abtastzeitpunkte der Detektorsignale durch die Auswerteanordnung (9) gemäß den Vorgaben in Anspruch 3 eingestellt werden.

14. Verfahren nach einem der Ansprüche 11 bis 13, bei dem das Störlicht-tolerante Lidar-Messsystem nach Anspruch 4 ausgestaltet ist und das ferner den Schritt aufweist, an der Auswerteeinheit (9) das Zeitintervall Δt_{Verschiebung} zu verändern, um die Entfernung eines Teilabschnitts (17) des Raumbereichs von dem Lidar-Messsystem zu verändern, wobei der Teilabschnitt (17) die Partikel enthält, deren rückgestreutes Licht bei der kohärenten Überlagerung des entlang des Messzweiges (4) geführten Lichtes und des entlang des Referenzzweiges (5) geführten Lichtes zur Interferenz beiträgt.

15. Verfahren nach einem der Ansprüche 11 bis 14 unter Verwendung eines Lidar-Messsystems, bei dem nach Anspruch 10 ein optischer Wellenleiter zumindest einen Teil des Messabschnitts (16) bildet, wobei die Reflexionseinrichtungen so angepasst sind, dass sie in Abhängigkeit einer auf sie einwirkenden Messgröße ihre Reflektivität und/oder ihre Polarisationseigenschaften ändern, oder die zwischen jeweils zwei benachbarten Reflexionseinrichtungen befindlichen Abschnitte des optischen Wellenleiters so angepasst sind, dass sie in Abhängigkeit einer auf sie einwirkenden Messgröße ihren optischen Weg ändern, wobei die Messgröße eine Dehnung des optischen Wellenleiters, eine Schwingung des optischen Wellenleiters und/oder eine Temperatur ist, wobei mit Hilfe der Auswerteeinheit (9) an verschiedenen Reflexionseinrichtungen oder verschiedenen Abschnitten zwischen Reflexionseinrichtungen entsprechenden Orten die Messgröße bestimmt wird oder wobei mit Hilfe der Auswerteeinheit (9) der optische Wellenleiter längenaufgelöst charakterisiert wird.

## Claims

1. A stray light-tolerant lidar measurement system for detecting the presence and/or movement of particles and/or objects in a spatial region remote from the lidar measurement system using an interferometer assembly, comprising:
a continuous-wave laser source (2),
a photoreceiver arrangement (7) adapted to output detector signals characteristic for light from the continuous-wave laser source (2) incident thereon,
optical components adapted and arranged such that light (23) emitted by the continuous-wave laser source (2)
is first split,
then guided along a first optical path forming a measuring branch (4) of the interferometer assembly and along a second optical path, separate from the first optical path, forming a reference branch (5) of the interferometer assembly, and
finally, after passing through the measuring branch (4) and the reference branch (5), is incident on the photoreceiver arrangement (7), wherein the reference branch (5) has a predetermined optical pathlength, and
the measuring branch (4) has a measuring section (16), in which the light is directed away from the measurement system in the direction of a spatial region remote therefrom and passes through the same, and light backscattered or reflected, resp., in the direction of the measurement system by particles and/or objects located in the spatial region is once again received at the measurement system,
wherein the continuous-wave laser source (2) has a coherence length in the range of 0.1 to 100 m,
and the continuous-wave laser source (2) further comprises:
a laser light-generating component (20) adapted to radiate laser light of one or two wavelengths,
an optical phase modulator (21) arranged downstream thereof, adapted to receive the laser light radiated by the laser light-generating component (20) and to modulate the same in its phase, wherein the optical phase modulator (21) has a control signal input and is adapted to carry out phase modulation based on a phase function defined by a control signal received at the control signal input, and
a control device (22) connected to the control signal input of the optical phase modulator (21) and adapted to deliver a control signal to the control signal input, which corresponds to a pseudo-noise signal defined by a predetermined phase function Θ(t), wherein the control signal causes the optical phase modulator (21) to carry out phase modulation with the predetermined phase function Θ(t), so that the optical power density spectrum of the laser light (23) radiated by the continuous-wave laser source (2) has a shape and bandwidth determined by the phase function Θ(t),
and the interferometer assembly further comprises
an evaluation unit (9) coupled to the interferometric photoreceiver arrangement (7) and adapted to receive the detector signals of the same and to determine the presence and/or movement of particles and/or objects in the remote spatial region from the detector signals, wherein in case of two wavelengths radiated by the laser light-generating component (20), the detector signals are detected separately in two wavelength ranges,
wherein
- the phase function Θ(t) has a predetermined approximately step-shaped time curve,
and
- the evaluation unit (9) samples the detector signals synchronously with the time grid of the steps of Θ(t),
wherein the optical propagation time T_{ref} in the reference branch (5) is selected such that it corresponds to the optical propagation time T_{interference,m} of a light path in the measuring branch of the measurement system (1) undesirable due to interfering cross-coupling or residual reflection or interfering scattering on solid components and objects as exactly as possible, or for multiple such light paths, corresponds to an average optical propagation time of the undesirable light paths, respectively measured from the split into measuring branch and reference branch up to the optical combination in the receiver arrangement (7).

2. The stray light-tolerant lidar measurement system according to claim 1, wherein optical fiber segments and optical paths in the measuring branch within the measurement system (1), which guide light bidirectionally with regard to the receiver arrangement (7), are selected to be as short as possible or are omitted altogether, so that the optical propagation times T_{interference,m} of undesirable optical light paths in the measuring branch to the photoreceiver arrangement, that arise due to interfering cross-coupling or residual reflection or interfering scattering, differ only little from one another.

3. The stray light-tolerant lidar measurement system according to any one of the preceding claims, wherein, in the evaluation unit (9), the sampling times tₛₐₘₚₗₑ are selected such that θ(tₛₐₘₚₗₑ-T_{ref}) and θ(tₛₐₘₚₗₑ-T_{interference,m}) for the largest spurious reflections or cross-couplings, resp., lie on the same step of the step-shaped phase function, and thus are approximately equal.

4. The stray light-tolerant lidar measurement system according to any one of the preceding claims, wherein the evaluation unit (9) is adapted to suppress the signals generated by spurious reflections and/or interfering scatterings and/or interfering light cross-couplings as strongly as possible, and to carry out the evaluation based on a function of the detector signals, the predetermined phase function, and a time shift value Δt_{Shift}, wherein the function is selected in such a way that the result of the function corresponds to the detector signals at a propagation time through the reference branch (5) altered by Δt_{Shift} compared to the actual propagation time through the reference branch (5), and the function comprises multiplication of the complex detector signals by the factor exp [-i [Θ(t+ Δt_{Shift}) - Θ(t))].

5. The stray light-tolerant lidar measurement system according to any one of the preceding claims, wherein the photoreceiver unit (7) comprises at least one optical 90 ° hybrid, thus forming a coherent optical receiver, by means of which in-phase and quadrature signals may be generated.

6. The stray light-tolerant lidar measurement system according to any one of the preceding claims, wherein the photoreceiver unit (7) includes at least one optical 6-port 90 ° hybrid having two optical inputs and four optical outputs and four photodetectors for balanced optical reception of in-phase and quadrature signals.

7. The stray light-tolerant lidar measurement system according to any one of the preceding claims, wherein the photoreceiver unit (7) contains polarization splitter arrangements, two optical 6-port 90 ° hybrids and two sets of four photodetectors for separate detection of the measuring signals in two orthogonal polarization states, or for being able to compute a polarization-independent overall power signal from the sub-signals.

8. The stray light-tolerant lidar measurement system according to any one of the preceding claims, the optical components comprising:
a beam splitter (3) for splitting the light (23) radiated by the continuous-wave laser source (2), polarization-maintaining or non-polarization-maintaining optical fibers, which define at least part of the reference branch (5), and/or such optical fibers, that define part of the measuring branch (4), an optical amplifier (11), in particular an erbium fiber amplifier, in the measuring branch (4) or upstream from the split into measuring branch (4) and reference branch (5), wherein an optical frequency shifter may be inserted in the measuring branch or the reference branch, and a coherent optical receiver arrangement (7) with or without polarization diversity containing a beam combiner, in particular in the form of a fiber-optic coupler, or one or two optical 90 ° hybrids.

9. The stray light-tolerant lidar measurement system according to any one of the preceding claims, wherein the optical components have a radiation and reception device defining the beginning and the end of the measuring section (16) of the measuring branch (4) and adapted to radiate the light away from the measurement system in the direction of the spatial region and to once again receive light backscattered in the spatial region, so that this light is guided along the sub-path (4b) of the measuring branch (4).

10. The stray light-tolerant lidar measurement system according to any one of the preceding claims, wherein the optical components have an arrangement for coupling into a waveguide, and the optical waveguide, together with reflection devices contained therein, defines at least part of the measuring section (16), in order to analyze the waveguide itself for defective points, location-dependent attenuation, or location-dependent polarization properties, or to implement a distributed waveguide optical sensor, in particular a fiber-optic sensor, wherein the waveguide, which defines part of the measuring section, may contain one or more optical modulators, in particular phase or frequency modulators, with the aim for static or quasistatic reflection devices or Rayleigh backscattering areas to effectively appear as moving reflection devices.

11. A method for detecting the presence and/or movement of particles in a remote spatial region by means of a stray light-tolerant lidar measurement system according to any one of claims 1 to 10, comprising the steps of:
arranging the measuring branch (4) in such a way that the remote spatial region is part of the measuring section (16),
adjusting the shape and/or bandwidth of the optical power density spectrum of the laser light (23) radiated by the continuous-wave laser source (2) by respectively adjusting the predetermined phase function Θ(t) at the control device (22),
operating the continuous-wave laser source (2) in order to guide laser light simultaneously along the measuring branch (4) and along the reference branch (5), and
determining the presence and/or movement and/or alteration of particles and/or objects in the remote spatial region by means of the evaluation unit (9).

12. The method according to claim 11, wherein the stray light-tolerant lidar measurement system according to any one of claims 1 to 10 is embodied, and comprising the step of adjusting the optical phase downstream from the continuous-wave laser source (2) to be approximately step-shaped by means of the control device (22) and the phase modulator (21).

13. The method according to claim 11 or 12, wherein the stray light-tolerant lidar measurement system according to any one of claims 1 to 10 is embodied, and further comprising the step of adjusting the optical propagation times Tref and T_{interference,m} according to the specifications in claims 1 and 2 and adjusting the sampling times of the detector signals by the evaluation unit (9) according to the specifications in claim 3.

14. The method according to any one of claims 11 to 13, wherein the stray light-tolerant lidar measurement system according to claim 4 is embodied, and further comprising the step of altering the time interval Δt_{Shift} at the evaluation unit (9) in order to alter the distance of a sub-section (17) of the spatial region from the lidar measurement system, wherein the sub-section (17) includes the particles, the backscattered light of which contributes to interference upon coherent superposition of the light guided along the measuring branch (4) and the light guided along the reference branch (5).

15. The method according to any one of claims 11 to 14 using a lidar measurement system, wherein, according to claim 10, an optical waveguide forms at least part of the measuring section (16), wherein the reflection devices are adapted such that they alter their reflectivity and/or their polarization properties as a function of a measured variable acting on them, or the sections of the optical waveguide respectively located between two adjacent reflection devices are adapted such that they alter their optical path as a function of a measured variable acting on them, wherein the measured variable is an elongation of the optical waveguide, an oscillation of the optical waveguide and/or a temperature, wherein, by means of the evaluation unit (9), the measured variable is determined at locations corresponding to various reflection devices or various sections between reflection devices, or wherein, by means of the evaluation unit (9), the optical waveguide is characterized with longitudinal resolution.

## Revendications

1. Système de mesure lidar tolérant à la lumière parasite pour détecter la présence et/ou le mouvement de particules et/ou d'objets dans une zone d'espace éloignée de ce système de mesure lidar, comprenant un agencement d'interféromètre lequel comprend
une source laser à onde continue (2),
un agencement de photo récepteur (7) adapté pour émettre des signaux du détecteur, caractéristiques de la lumière provenant de ladite source laser à onde continue (2) et qui est incidente sur celui-ci, des composants optiques adaptés et disposés de telle sorte que la lumière (23) émise par ladite source laser à onde continue (2)
soit d'abord séparée,
soit, ensuite, dirigée le long d'un premier trajet optique formant une branche de mesure (4) dudit agencement d'interféromètre et d'un second trajet optique séparé de celui-ci et formant une branche de référence (5) dudit agencement d'interféromètre, et enfin, après être passée par ladite branche de mesure (4) et ladite branche de référence (5), arrive sur ledit agencement de photo récepteur (7), ladite branche de référence (5) ayant une longueur de trajet optique prédéterminée, et
ladite branche de mesure (4) comportant une section de mesure (16) dans laquelle la lumière est dirigée à l'écart du système de mesure en direction d'une zone d'espace éloignée de celui-ci et passe par ladite zone d'espace et la lumière rétrodiffusée ou réfléchie par des particules et/ou des objets situés dans la zone d'espace en direction du système de mesure est à nouveau reçue au niveau du système de mesure,
ladite source laser à onde continue (2) ayant une longueur de cohérence comprise dans une plage entre 0,1 et 100 m,
et ladite source laser à onde continue (2) comprenant en outre:
un composant générateur de lumière laser (20) adapté pour émettre une lumière laser d'une ou de deux longueurs d'onde,
un modulateur de phase optique (21) connecté en aval de celui-ci et adapté pour recevoir et moduler en phase la lumière laser émise par ledit composant générateur de lumière laser (20), ledit modulateur de phase optique (21) ayant une entrée de signal de commande et étant adapté pour effectuer la modulation de phase sur la base d'une fonction de phase définie par un signal de commande reçu à l'entrée de signal de commande, et un dispositif de commande (22) connecté et adapté à l'entrée de signal de commande dudit modulateur de phase optique (21), pour fournir à ladite entrée de signal de commande un signal de commande correspondant à un signal de pseudo-bruit défini par une fonction de phase prédéterminée Θ(t), ledit signal de commande entraînant que ledit modulateur de phase optique (21) effectue ladite modulation de phase avec ladite fonction de phase prédéterminée Θ(t) de sorte que le spectre de densité de puissance optique de la lumière laser (23) émise par ladite source laser à onde continue (2) ait une forme et une largeur de bande déterminées par ladite fonction de phase Θ(t),
et l'agencement d'interféromètre comprenant en outre:
une unité d'évaluation (9) couplée audit agencement de photo récepteur interférométrique (7) et adaptée pour recevoir les signaux du détecteur de celui-ci et pour déterminer à partir des signaux du détecteur la présence et/ou le mouvement de particules et/ou d'objets dans la zone d'espace éloignée, dans laquelle, dans le cas de deux longueurs d'onde émises par ledit composant générateur de lumière laser (20), les signaux du détecteur sont détectés séparément dans deux plages de longueurs d'onde,
- ladite fonction de phase Θ(t) ayant un déroulement temporel prédéterminé, approximativement en forme d'escalier
et
- ladite unité d'évaluation (9) scannant les signaux du détecteur en synchronisation avec la grille de temps des marches de l'escalier de Θ(t),
le temps de trajet optique T_{réf} dans ladite branche de référence (5) étant choisi de telle sorte qu'il corresponde le plus précisément possible au temps de trajet optique T_{interférence,m} d'un trajet optique dans ladite branche de mesure dudit système de mesure (1) qui est indésirable en raison d'un surcouplage parasite ou d'une réflexion résiduelle ou d'une diffusion parasite sur des composants et des objets fixes, ou, dans le cas de plusieurs trajets optiques de ce type, à un temps de trajet optique moyen des trajets optiques indésirables, mesuré à chaque fois à partir de la bifurcation en branche de mesure et de référence jusqu'à la combinaison optique dans ledit agencement de récepteur (7).

2. Système de mesure lidar tolérant à la lumière parasite selon la revendication 1, dans lequel les tronçons de fibres optiques et les trajets optiques dans ladite branche de mesure à l'intérieur dudit système de mesure (1), lesquels dirigent la lumière de manière bidirectionnelle vers ledit agencement de récepteur (7), sont sélectionnés aussi courts que possible ou sont complètement omis, de sorte que les temps de trajet optique T_{interférence,m} des trajets optiques indésirables dans ladite branche de mesure vers ledit agencement de photo récepteur et qui sont causés par un surcouplage parasite ou une réflexion résiduelle ou une diffusion parasite, ne diffèrent que légèrement.

3. Système de mesure lidar tolérant à la lumière parasite selon l'une des revendications précédentes, dans lequel les temps d'échantillonnage T_{échantillonnage} sont sélectionnés dans ladite unité d'évaluation (9) de telle sorte que θ(t_{échantillonnage}-T_{réf}) et θ(t_{échantillonnage}-T_{interférence,m}) pour les réflexions ou les surcouplages parasites les plus importants se trouvent sur le même niveau de la fonction de phase en escalier et soient, par conséquent, approximativement de la même taille.

4. Système de mesure lidar tolérant à la lumière parasite selon l'une des revendications précédentes, dans lequel ladite unité d'évaluation (9) est adaptée pour supprimer autant que possible les signaux générés par des réflexions parasites et/ou une diffusion parasite et/ou un surcouplage parasite de lumière, et pour effectuer l'évaluation sur la base d'une fonction des signaux du détecteur, de la fonction de phase prédéterminée et d'une valeur de déphasage Δt_{déphasé}, la fonction étant sélectionnée de telle sorte que le résultat de la fonction corresponde aux signaux du détecteur à un temps de transit par la branche de référence (5) modifié par Δt_{déphasé} par rapport au temps de transit réel par la branche de référence (5), et la fonction comprenant la multiplication des signaux complexes du détecteur par le facteur exp [-i [Θ(t+ Δt_{déphasé}) - Θ(t))].

5. Système de mesure lidar tolérant à la lumière parasite selon l'une des revendications précédentes, dans lequel l'unité photo réceptrice (7) comprend au moins un hybride optique à 90° et, ainsi, un récepteur optique cohérent est construit avec lequel des signaux en phase et en quadrature peuvent être générés.

6. Système de mesure lidar tolérant à la lumière parasite selon l'une des revendications précédentes, dans lequel ladite unité photo réceptrice (7) comprend au moins un hybride 90° optique à < 6 ports avec deux entrées optiques et quatre sorties optiques et quatre photo détecteurs pour la réception optique équilibrée de signaux en phase et en quadrature.

7. Système de mesure lidar tolérant à la lumière parasite selon l'une des revendications précédentes, dans lequel ladite unité photo réceptrice (7) contient des agencements de séparateur de polarisation et comprend deux hybrides 90° optiques à 6 ports et deux fois quatre photo détecteurs pour la détection séparée des signaux de mesure dans deux états de polarisation orthogonaux ou pour pouvoir calculer un signal de puissance totale indépendant de la polarisation à partir des signaux partiels.

8. Système de mesure lidar tolérant à la lumière parasite selon l'une des revendications précédentes, dont les composants optiques comprennent
un séparateur de faisceau (3) pour séparer la lumière (23) émise par la source laser à onde continue (2),des fibres optiques maintenant la polarisation ou ne la maintenant pas et qui définissent au moins une partie de ladite branche de référence (5) et/ou de telles fibres optiques qui définissent une partie de ladite branche de mesure (4),
un amplificateur optique (11), en particulier un amplificateur à fibre d'erbium, dans ladite branche de mesure (4) ou avant la bifurcation en branches de mesure (4) et de référence (5), un dispositif de décalage de fréquence optique pouvant être utilisé dans ladite branche de mesure ou dans ladite branche de référence, et un agencement de récepteur optique cohérent (7) avec ou sans diversité de polarisation, lequel contient un combinateur de faisceau, en particulier sous la forme d'un coupleur à fibres optiques, ou un ou deux hybrides 90° optiques.

9. Système de mesure lidar tolérant à la lumière parasite selon l'une des revendications précédentes, dans lequel les composants optiques comprennent un dispositif d'émission et de réception, lequel définit le début et la fin de la section de mesure (16) de ladite branche de mesure (4) et est adapté pour émettre la lumière à partir du système de mesure vers la zone d'espace et pour recevoir à nouveau la lumière rétrodiffusée dans la zone d'espace, de sorte qu'elle soit dirigée le long du trajet partiel (4b) de ladite branche de mesure (4).

10. Système de mesure lidar tolérant à la lumière parasite selon l'une des revendications précédentes, dans lequel les composants optiques comprennent un agencement de couplage dans un guide d'onde et dans lequel le guide d'onde optique avec des moyens de réflexion compris dans celui-ci définit au moins une partie de la section de mesure (16), pour ainsi analyser le guide d'onde lui-même pour des défauts, une atténuation dépendant de l'emplacement ou des propriétés de polarisation dépendant de l'emplacement, ou pour réaliser un capteur à guide d'onde optique distribué, en particulier un capteur à fibre optique, ledit guide d'onde qui définit une partie de la section de mesure pouvant contenir un ou plusieurs modulateurs optiques, en particulier des modulateurs de phase ou de fréquence, dans le but de faire apparaître effectivement des dispositifs de réflexion statiques ou quasi-statiques ou des zones de rétrodiffusion de Rayleigh comme des dispositifs de réflexion mobiles.

11. Procédé pour détecter la présence et/ou le mouvement de particules dans une zone d'espace éloignée au moyen d'un système de mesure lidar tolérant à la lumière parasite selon l'une quelconque des revendications 1 à 10, comprenant les étapes suivantes:
disposer ladite branche de mesure (4) de manière à ce que la zone d'espace éloignée fasse partie de ladite section de mesure (16) ;
mettre au point la forme et/ou la largeur de bande du spectre de densité de puissance optique de la lumière laser (23) émise par la source laser à onde continue (2) en réglant en conséquence la fonction de phase prédéterminée Θ(t) sur le dispositif de commande (22) ;
faire fonctionner ladite source laser à onde continue (2) pour diriger la lumière laser simultanément le long de ladite branche de mesure (4) et le long de ladite branche de référence (5) et
déterminer la présence et/ou le mouvement et/ou le changement de particules et/ou d'objets dans la zone d'espace éloignée à l'aide de l'unité d'évaluation (9).

12. Procédé selon la revendication 11, dans lequel le système de mesure lidar tolérant à la lumière parasite est conçu selon l'une des revendications 1 à 10 et qui présente l'étape selon laquelle la phase optique derrière ladite source laser à onde continue (2) est réglée approximativement en forme d'escalier à l'aide dudit dispositif de commande (22) et dudit modulateur de phase (21).

13. Procédé selon la revendication 11 ou 12, dans lequel le système de mesure lidar tolérant à la lumière parasite est conçu selon l'une des revendications 1 à 10 et qui comprend en outre l'étape consistant à régler les temps de transit optiques T_{réf} et T_{interférence,m} selon les spécifications des revendications 1 et 2 et les temps d'échantillonnage des signaux du détecteur par ledit agencement d'évaluation (9) selon les spécifications de la revendication 3.

14. Procédé selon l'une des revendications 11 à 13, dans lequel le système de mesure lidar tolérant à la lumière parasite selon la revendication 4 est conçu et qui comprend en outre l'étape consistant à modifier l'intervalle de temps Δt_{décalé} au niveau de ladite unité d'évaluation (9) afin de modifier la distance d'une section partielle (17) de la zone d'espace par rapport au système de mesure lidar, ladite section partielle (17) contenant les particules dont la lumière rétrodiffusée contribue à l'interférence dans la superposition cohérente de la lumière dirigée le long de ladite branche de mesure (4) et de la lumière dirigée le long de ladite branche de référence (5).

15. Procédé selon l'une des revendications 11 à 14 utilisant un système de mesure lidar, dans lequel, selon la revendication 10, un guide d'onde optique forme au moins une partie de ladite section de mesure (16), les dispositifs de réflexion étant adaptés pour modifier leur réflectivité et/ou leurs propriétés de polarisation en fonction d'une variable de mesure agissant sur eux, ou les sections du guide d'onde optique situées entre deux dispositifs de réflexion adjacents quelconques sont adaptées pour le faire, en ce qu'ils modifient leur trajet optique en fonction d'une grandeur de mesure qui agit sur eux, la grandeur de mesure étant un allongement du guide d'onde optique, une vibration du guide d'onde optique et/ou une température, la grandeur de mesure étant déterminée à l'aide de ladite unité d'évaluation (9) en des endroits correspondant à différents dispositifs de réflexion ou à différentes sections entre les dispositifs de réflexion, ou le guide d'onde optique étant caractérisé sous une forme résolue en longueur à l'aide de ladite unité d'évaluation (9).
